# EUROPEAN PATENT APPLICATION

(11) **EP 3 808 832 A1**
(43) Date of publication of application: **21.04.2021**
(21) Application number: 20201673.9
(22) Date of filing: 14.10.2020
(51) Int. Cl.: C12C 12/00, C12H 1/14

(54) **BEER RICH IN ANTIOXIDANTS**

(30) Priority: 14.10.2019 EP 19202996
(71) Applicant: Rodriguez Morato, Jose, 08025 Barcelona (ES)
(72) Inventor: The designation of the inventor has not yet been filed
(74) Representative: Eisenführ Speiser

(57) **Abstract**

The present invention relates to the field of new functional beverages and provides a beer or beer containing beverage with a content of > 50 mg/L antioxidants. Moreover, the present invention provides also a new fermentation process for the production of such beer or beer containing beverage and discloses also a non-therapeutic use of such a beer to provide an antioxidative effect. The present invention also discloses the use in a method to impart a cardioprotective and/or neuroprotective effect and/or antioxidative effect on a human subject, preferably by preventing the oxidation of LDL particles, by increasing HDL, and/or by improving the endothelial function in a human subject.

## Description

### Technical Field

The present invention relates to the field of new functional beverages and provides a beer or beer containing beverage with an enriched content of antioxidants. Moreover, the present invention provides also a new fermentation process for the production of such beer or beer containing beverage and discloses also a non-therapeutic use of such a beer to provide an antioxidative effect. The present invention also discloses the use in a method to impart a cardioprotective and/or neuroprotective effect and/or antioxidative effect on a human subject, preferably by protecting low density lipoprotein (LDL) particles from oxidative damage and/or by improving the endothelial function and/or by increasing high density lipoprotein (HDL) cholesterol in a human subject.

### Background of the invention

Over the past decade, a variety of new functional foods and beverages arose to the market which claim a benefit on human health and well-being. Nevertheless, the term functional food is new, but not the concept of delivering food with beneficial properties on the health to people. The Japanese food Kimchi is a prominent example for this very old trend in human nutrition. The oldest reports on Kimchi are going back 2500 to 3000 years and stress the importance of functional food for human health. Kimchi is a fermented vegetable or vegetable mix, comparable to German Sauerkraut, which includes a high level of vitamin B, lactic acid and probiotic bacteria strengthening the gut and digestive tract health. There are more potential health-beneficial substances in the area of functional food, such as vitamins, mineral compounds, fibres and the important antioxidants. They are known to be absorbed in the human body and impart a counterpart against oxidative stress.

During recent studies it was found that moderate alcohol content (1-2 drinks per day for women and 2-4 drinks per day for men) is inversely associated with the total mortality. It was also shown that the antioxidants from olive oil can have a potential beneficial influence on cardiovascular and also neurodegenerative disorders (Rodríguez-Morató et al., Potential role of olive oil phenolic compounds in the prevention of neurodegenerative diseases. Molecules. 2015;20(3):4655-4680*).* The most prominent examples of such antioxidants are hydroxytyrosol and tyrosol, which are the strongest antioxidants from olive oil. They are known to be absorbed and metabolized in the human body. Hydroxytyrosol is one of the strongest antioxidants presents in the Mediterranean Diet (Granados-Principal et al. Hydroxytyrosol: from laboratory investigations to future clinical trials. Nutr Rev. 2010;68(4):191-206*.*). This compound exerts several health-promoting properties: the most studied include cardioprotective and neuroprotective activities, although it has also been described to have antitumoral, antimicrobial and antidiabetic activities *(*Covas et al. The Effect of Polyphenols in Olive Oil on Heart Disease Risk Factors: A Randomized Trial Olive Oil Polyphenols and Heart Disease Risk. Annals of Internal Medicine. 2006;145(5):333-341*).* Tyrosol is also an antioxidant compound but it has a lower biological activity, compared to hydroxytyrosol. Both tyrosol and hydroxytyrosol are characteristic phenolic compounds found in olive oil and, as shown by controlled multicentric studies performed in healthy volunteers, they provide benefits for heart disease risk factors (by conferring protection against plasma lipid levels and oxidative damage). In 2011, the European Food and Safety Authority (EFSA) released a health claim concerning the benefits of the daily ingestion of 5 mg of hydroxytyrosol and its derivatives (including tyrosol) in olive oil in the prevention of LDL oxidation (EFSA Panel on Dietetic Products, Nutrition and aller-gies (NDA) (2011) Scientific opinion on the substantiation of health claims related to polyphenols in olive oil and protection of LDL particles from oxidative damage. EFSA J 9, 2033*).* Although some commercially available supplements of hydroxytyrosol exist in the market (e.g. in the form of capsules), the lack of an appropriate matrix does not allow its absorption and thus no relevant biological actions and therefore the antioxidative effect will take place. Another drawback that hampers the use of hydroxytyrosol as a supplement is the high costs of hydroxytyrosol production, its low stability, and its low bioavailability. In the case of tyrosol, its production is much cheaper, and its stability and bioavailability are higher.

The production of several functional foods with antioxidants was recently reported. For example, the Chinese patent application CN106497729A relates to a fermented alcoholic beverage with olive ingredients to deliver antioxidants to wine. The crude addition of phenolic compounds leads to a negative bittering effect on the functional food and exceeds therefore a high risk of not being accepted by people and could therefore not impart the desired health properties.

Antioxidants can also be used in food and beverages based on their stabilizing properties on certain food and beverage compounds. The Chinese patent application CN109609303A relates to methods for improving the antioxidant activity in beer malt. This application involves a special treatment step with chitosan and gamma-butyric acid for malt which is highly costly in the production process and the residues of the treatment chemicals needs to be removed to comply with valid food regulations.

The international patent application WO2009032215A1 relates to a method for improving the stability of food and beverages during storage by using antioxidants from olives instead of sulphites. The purpose of this invention is not the delivery of a new functional beverage and the concentrations used for stabilizing are not suitable for a functional beverage as it would negatively affect the taste of the beverage and is moreover also not suitable to convey a functional effect on the health.

As no suitable functional and economically available matrix is present to deliver a high concentration of antioxidants as a functional food or beverage for human consumption, the primary objective underlying the present invention is the provision of new methods for obtaining functional food or beverage products with an enriched content of antioxidants, preferably allowing a particularly advantageous bioavailability. Further objectives relate to the provision of new, correspondingly enriched new functional food or beverage products, which offer a particularly suitable functional matrix for the delivery of antioxidants to the human body. Additional objectives underlying the present invention become apparent when studying the following description and the attached set of claims.

### Summary of the invention

The primary objective is solved by providing a method for the production of beer or beer containing beverage with an enriched content of antioxidants including the necessary steps as described herein, in particular in the attached set of claims. In a first step, at least one raw material intended for oral consumption, which contains one or more precursor(s) of antioxidants in a total amount of > 150 mg/kg, based on the total amount of raw material(s) is provided. In a second step, the at least one raw material is contacted with water and heated up to at least 30°C. This obtained mixture is then heated up to at least 75°C for a maximum of 5 minutes followed by filtering of the thus obtained mixture, the addition of hops and a subsequent sterilization step. The obtained mixture is cooled to a temperature below 30°C, followed by the addition of at least one yeast and/or microorganism capable of forming one or more antioxidant(s) from the precursor(s) provided in the first step. In the next step, the yeast and/or microorganism and optionally other solid ingredients are separated by mechanical separation and a beer or beer containing beverage with enriched antioxidant content is obtained.

In one embodiment of the present invention, the antioxidant precursor is tyrosine.

In yet another embodiment of the present invention, the, one, more or all raw material(s) is/are selected from the group consisting of malted wheat, barley, wheat, oat flakes, maize, ginger, pumpkin, soy, peas, apple, curcuma, nuts, walnuts, pumpkin, pumpkin seeds, sunflower seeds, hazelnuts, pecan, beans, adzuki beans, teff, kamut, brown rice, bulgur, quinoa, cous cous, spirulina, pearled barley, split peas, roman beans, kidney beans, black beans, broad beans, pinto beans, cocoa, chickpeas, lentils, macadamia nuts, almonds, cashews, chestnuts, peanuts, coconut, pistachios, rice, rye, millet, berries, raspberry, cherry, blueberry and strawberry.

In yet another embodiment of the present invention, the hops can be added as hop extract and/or dried hops and/or fresh hops.

Moreover, methods for the sterilization and mechanical separation are disclosed.

In a second aspect, a beer or beer containing beverage with a total antioxidant content of > 50 mg/L is disclosed, which has in one embodiment of the beer or beer containing beverage according to the invention a tyrosol content of > 75 mg/L or > 100 mg/L, or even > 150 mg/L.

Moreover, a non-therapeutic use of the beer or beer containing beverage is disclosed for imparting an antioxidative effect, as well as the use in a method for imparting a health promoting or disease preventing cardioprotective and neuroprotective and/or antioxidative effect on a human subject.

Further aspects and preferred embodiments of the present invention are described herein below.

### Detailed description of the invention

In a first aspect of the present invention a method is provided for the manufacturing of a beer or beer containing beverage with an enriched antioxidant content, comprising or consisting of the steps:
i) providing at least one raw material intended for oral consumption containing one or more precursor(s) of antioxidants in a total amount of > 150 mg/kg, based on the total amount of the raw material(s),
ii) contacting the at least one raw material provided in step i) with water and heating the mixture to at least 30°C,
iii) heating the mixture obtained in step ii) to at least 75°C for a maximum of 5 minutes,
iv) filtering the mixture obtained in step iii),
v) adding hops to the mixture obtained in step iv) and sterilizing the resulting mixture,
vi) cooling the mixture obtained in step v) to a temperature below 30°C,
vii) adding at least one yeast and/or microorganism capable of forming one or more antioxidant(s) from the precursor(s) contained in the at least one raw material provided in step i) and incubating the mixture for at least 48 hours at a temperature of 2°C to 30°C,
viii) separating the yeast and/or microorganism and optionally other solid ingredients by mechanical separation,
ix) obtaining a beer or beer containing beverage with enriched antioxidant content.

In terms of the present invention, the term raw material refers to all nutritive or medicinal materials, which can be used as basis for the manufacturing of a beer or a beer containing beverage. Specific but not limiting examples of such raw materials are presented herein below. In one embodiment of the present invention, preferably one raw material contains starch, hydrolysed starch, polysaccharides and/or monosaccharides.

A precursor of an antioxidant refers in terms of the present invention to all compounds which can be metabolized to a functional compound with antioxidative properties. This means, for example, the ability to prevent oxidation (which is essentially important to protect cells from oxidative damage), the ability to improve the endothelial function and the ability to increase plasma HDL cholesterol.

The contacting step in step ii) of the process according to the invention can be conducted according to one embodiment by mixing the raw materials with water in a single phase system. According to another embodiment, the contacting step can be conducted by separating the raw materials and the water to form a two phase system by e.g. using a semipermeable membrane, a filter or a density gradient. Phase-separation methods are well known to the person skilled in the art. The heating step to at least 30°C involves the important step for enzyme activation, the so-called mashing, for the starch degradation of the raw materials to generate monosaccharides and therefore the yeast and/or microorganism feed for the fermentation step setting on later in the method according to the invention. In one embodiment of the method according to the invention, the mashing consists of two, preferably three, more preferably four, further preferably five and yet more preferably of six or more subsequent mashing steps consisting of a combination of a temperature and time, the so-called resting temperature and resting time. Therein, the temperature of the subsequent mashing step is always higher than the previous temperature until a maximum of 78°C and the corresponding time is at least 5 minutes.

The subsequent additional heating step to at least 75°C is crucial for enzyme inactivation and stopping of the starch or sugar hydrolysis. The adoption of this method step to the individual mashing set-up is a standard procedure in the brewing process and well-known to the person skilled in the art. The subsequent filtering step in step iv) is crucial for the separation of all remaining solid particles from the raw materials, if they are not removed, they can negatively impact the subsequent steps in terms of flavour and the appearance of the remaining product.

Sterilization in terms of the present invention refers to any process that eliminates, removes, kills, or deactivates all forms of life (in particular referring to microorganisms such as fungi, bacteria, viruses, spores, unicellular eukaryotic organisms such as *Plasmodium,* etc.) and other biological agents to obtain a safe, harmless beverage. In one embodiment of the method according to the invention, the sterilization step is followed by the addition of antioxidants which can serve in a double function; on the hand the addition of antioxidants delivers an additional building block for the total antioxidant amount in the obtained beer or beer containing beverage and on the other hand, the addition of antioxidants can contribute to the flocculation of turbidity particles and proteins and can ease the mechanical separation in the following processing step, as well as the protein flocculation has a beneficial influence on the taste in the obtained beer or beer containing beverage.

A yeast and/or microorganism capable of forming antioxidants in terms of the present invention is every yeast and/or microorganism that has a metabolic pathway capable of converting the antioxidant precursors from step i) into compounds with an antioxidative effect. In a preferred embodiment of the method according to the invention the raw material(s) contain(s) the amino acid tyrosine which is metabolized by yeast and/or microorganism to tyrosol via the Ehrlich pathway. Tyrosol is a weak antioxidant, but is metabolized in the human body to hydroxytyrosol and exhibits then its antioxidative properties. This two-times conversion is especially beneficial in terms of costs and feasibility of the production. Tyrosine is ubiquitously present in a large variety of different raw materials that can be used for beer brewing. Therefore, it is much cheaper to use such a precursor method for the delivery of highly functional antioxidants to the human body.

The separation step in step viii) refers, according to the present invention, to a separation of the liquid and the solid phase in the semi-finished beer or beer containing beverage to exclude all potential by-products with a negative effect on the appearance, functionality and taste of the obtained beer or beer containing beverage such as solid bittering particles, yeast and/or microorganism and yeast and/or microorganism debris. Preferably, the separation step is also the final step before obtaining the customer grade beer or beer containing beverage in step ix).

It was surprisingly found, that the delivery of antioxidants in a beer matrix, in particular in a hydroalcoholic beer matrix shows an increased bioavailability of added antioxidants in the human body. The formulation as a beer or beer containing beverage has several advantages as functional food. It is well known and accepted by people as a consumer or luxury good, there is a wide variety of different beer types and special beer types for each region and the production of beer is in general a cheap and easy scalable process.

According to one preferred embodiment of the method according to the invention, the / one antioxidant precursor is tyrosine, which is metabolized by the yeast and/or microorganism according to the before mentioned Ehrlich pathway.

In another preferred embodiment the, one, more or all raw material(s) is/are selected from the group consisting of malted barley, malted wheat, barley, wheat, oat flakes, maize, ginger, pumpkin, soy, peas, apple, curcuma, nuts, walnuts, pumpkin, pumpkin seeds, sunflower seeds, hazelnuts, pecan, beans, adzuki beans, teff, kamut, brown rice, bulgur, quinoa, cous cous, spirulina, pearled barley, split peas, roman beans, kidney beans, black beans, broad beans, pinto beans, cocoa, chickpeas, lentils, macadamia nuts, almonds, cashews, chestnuts, peanuts, coconut, pistachios, rice, rye, millet, berries, raspberry, cherry, lemon, lime, banana, blueberry and strawberry.

Another preferred embodiment relates to providing at least one fruit or vegetable component, selected from peel, juice, flesh or combinations thereof, together with the at least one raw material of step (i), wherein the fruit or vegetable is selected from lemon, lime, kiwi fruit, pumpkin, green pepper, cabbage, fig, apple, grapefruit and banana. Preferably the at least one fruit / vegetable component is provided at a concentration of in the range from 50 to 150 g/L, preferably 75 to 125 g/L, more preferably 90 to 110 g/L, preferably of approx. 100 g/L.

In one preferred embodiment of the method according to the invention, the hops in step v) is added as hops extract and/or dried hops and/or fresh hops. Hops extract hereby refer to an extract of fresh or dried hops made with alcohol extraction and all compounds of fresh hops are extracted. This extract can be used without heating the mixture to a certain temperature and is therefore also usable for cold sterilization techniques as described before. Fresh hops refer to the flowers of the hops plant, which are collected and are directly used in the brewing process. Dry hops are the hops flowers which are dried until a water content of <12% remains. Both, fresh and dry hops have to be heated to temperatures of > 80°C to extract all bitter, functional and aromatic compounds. The compounds of hops which are extracted for the hops extract and also during heating of the mixture comprise humulon, lupulon, chalcones, flavonoids, hopein, etc.

In one preferred embodiment according to the invention the sterilization in step v) is done by a method selected from the group consisting of sterile filtration, steam sterilisation, heat sterilization and high-pressure sterilization. In one embodiment, the sterilization is done via sterile filtration. In this method, preferably a sterile filter with a pore size of ≤ 0.2 µm is used which filters bacteria and other contaminating microorganisms from the mixture. The sterile filtration is a cold process and involves no heat above 40 °C. This is especially beneficial as the functional ingredients (precursors and antioxidants) are not degraded at high temperatures. The avoidance of high temperatures can therefore result in a higher antioxidant content in the obtained beer or beer containing beverage. In another embodiment, the sterilization is done via steam or heat sterilization. Both methods involve high temperatures of > 80°C, more > 100°C. The steam sterilization is done via heating the whole mixture to a temperature of > 100°C via steam inlet, whereas the heat sterilization refers to heating up the whole mixture to a temperature of > 80°C. In another embodiment, the sterilization is done with high pressure sterilization using high pressures of 400 to 1000 MPa to inactivate possible harmful microorganisms.

In yet another embodiment of the present invention the at least one yeast and/or microorganism provided in step vii) is/are selected from the group consisting of *Saccharomyces cerevisiae* and ssp., *Lactococcus lactis* and ssp., *Lactobacillus lactis* and ssp., *Saccharomyces pastorianus* and *Saccharomyces carlsbergensis,* preferably *Saccharomyces cerevisiae.*

Preferably, the incubation of the mixture in step vii) is done at a temperature of in the range of from 8 to 16 °C, more preferably at a temperature in the range of from 8 to 12 °C and most preferably at a temperature of in the range of from 8 to 10 °C.

Preferably the incubation of the mixture in step vii) is done for 10, 11, 12, 13, 14, 15, 16, 17, 18, 19, 20 or 21 days, more preferably at a temperature as described above.

In one embodiment of the present invention, the mechanical separation is done by a method selected from the group consisting of centrifugation, filtration, decantation and sedimentation. In one embodiment, the mechanical separation is conducted by using centrifugation, which offers the advantage of a low heat input and a fast separation. Suitable conditions are well known to the person skilled in the art. In another embodiment, the mechanical separation is done by filtration, which exhibits the benefits of a low heat input and the possibility of a continuous mode of operation, which is especially beneficial for the large scale production of a beer or beer containing beverage according to the invention. In one embodiment of the present invention, another step x) is added, including the addition of tyrosol to the beer before bottling and carbonizing the beer to adjust the tyrosol content to at least > 50 mg/L in the final beer or beer containing beverage.

In yet another preferred embodiment of the present invention, an additional step xi) is added, including the protection of the beer or beer containing beverage obtained in step ix) or step x) from light. This step can be e.g. done by filling the beer into lightproof bottles or by adding e.g. vanadium pentaoxide into the glass slug used for the manufacturing of glass bottles, in which the beer or beer containing beverage obtained in step ix) or x) can be stored. The reaction of the produced tyrosol with light would lead to oxidation of the tyrosol and thus to inactivation of the desired antioxidant before it can be converted to hydroxytyrosol in the human body.

In another embodiment of the method according to the invention, the obtained beer or beer containing beverage contains a total antioxidant content of > 50 mg/L, more preferably of 75 mg/L, especially preferably of > 100 mg/L, more preferably of > 150 mg/L. This amount of antioxidants is surprisingly beneficial for imparting a positive effect on the human health.

In yet another embodiment of the present invention, the obtained beer or beer containing beverage contains > 50 mg/L tyrosol, more preferably of 75 mg/L, especially preferably of > 100 mg/L, more preferably of > 150 mg/L. It was surprisingly found that tyrosol in a preferred amount as mentioned before is able to impart in combination with the beer matrix a beneficial influence on human health as it is converted to hydroxytyrosol, a strong phenolic compound, in the human body.

A second aspect of the previous invention relates to a beer or a beer containing beverage with a total antioxidant content of > 50 mg/L, preferably of > 75 mg/L, more preferably of > 100 mg/L, especially preferably of > 150 mg/L. In one embodiment of the invention, the beer or beer containing beverage contains a maximum of 6% (v/v) ethanol. Besides targeting a low alcohol level with adjusting the method conditions, a low ethanol level can also be reached by applying methods well known by the person skilled in the art such as reverse osmosis, vacuum distillation, membrane distillation and membrane filtration.

In another embodiment the beer according to the invention comprises > 50 mg/L tyrosol, preferably of > 75 mg/L, more preferably of > 100 mg/L, especially preferably of > 150 mg/L. Tyrosol is used as before mentioned as a precursor, which can be later converted to hydroxytyrosol during metabolization.

In yet another embodiment, the beer according to the invention is produced or producible by a method according to the invention.

In another aspect of the present invention the beer or beer containing beverage is used non-therapeutically for imparting an antioxidative effect.

In yet another aspect of the invention, the beer or beer containing beverage according to the invention is used in a method for imparting a cardio protective and/or neuroprotective effect and/or health-promoting or disease preventing antioxidative effect on a human subject, preferably by preventing the oxidation of LDL in a human subject, by increasing HDL cholesterol and/or by improving the endothelial function. It was found that antioxidants are able to counteract the detrimental effects of free radicals from the human body. This has a special influence on the prevention of peroxidation of lipids, particularly of polyunsaturated fatty acids and the accompanying destruction of cell membranes and DNA damage. By prevention of the oxidation, this negative effect can be counteracted.

The invention is further characterized and described by illustrative, non-limiting examples.

### Examples

### Example 1: Manufacturing of a beer with enriched antioxidant content "Pilsner style"

For 100 L, 21.5 KG Pilsner malt, 1 KG Oat flakes and 2.4 KG Vienna malt were crushed and mixed with 120 L 45 °C warm water and incubated for 5 minutes. The mashing scheme listed in table 1 is applied subsequently.

**Table 1: Mashing scheme**

| Mashing step | Temperature [°C] | Time [min] |
|---|---|---|
| 1 ("Enzyme activation") | 45 | 5 |
| 2 ("First rest") | 58 | 15 |
| 3 ("Second rest") | 62 | 25 |
| 4 ("End of sugar hydrolysis") | 72 | 30 |

Afterwards, the broth mixture is heated to 78 °C to inactivate the enzymes. Subsequently, the broth is sterilized by heating it to 100°C and leaving it there for at least 90 minutes. Afterwards, the solid particles and remaining barley and oat residues are removed by using a stainless steel filter with a pore size of 10 µm. The filtered broth is then heated to 100 °C for at least 80 minutes. After 5 minutes at 100°C 50 g "Hallertauer Tradition" hops are added, after 30 minutes at 100°C 45 g "Perle" hops are added and after 75 minutes at 100°C 15 g of "Saphir" hops are added. The broth is then sterilized by high-pressure sterilization at a pressure of 450 MPa and subsequently cooled to below 30°C before additionally filtered with a cellulose-filter with a pore size of 0.45 µm to obtain a clear broth. The cold broth is then inoculated with the yeast "2007 Pilsen Lager" from Wyeast and incubated at 11°C until a rest sugar of 2.5 °Plato is remaining. The obtained beer is again filtered with a 0.45 µm filter, bottled and carbonized.

### Example 2: Formulation of a beer with enriched antioxidant content "Pilsner style"

In table 2, typical compounds of the beer manufactured in example 1 are displayed. Variations are dependent on the antioxidant content of the raw material and the effectivity of the yeast.

**Table 2: Amount of functional compounds in a beer according to example 1**

| Compound | Amount [mg/L] |
|---|---|
| Tyrosol | 70 - > 100 |
| Carbohydrates | 3600 - 3800 |
| Bitter compounds | 1000 - 1300 |
| Organic Acids | 300 - 400 |
| Protein | 3000 - 3800 |

### Example 3: Tyrosol content during fermentation

In table 3, contents of tyrosine and tyrosol during fermentation according to the present invention, i.e. of an exemplary beer produced according to the present invention, are shown.

**Table 3: Tyrosol content during fermentation**

| **Fermentation time [days]** | **Tyrosine content [mg/L]** | **Tyrosol content [mg/L]** |
|---|---|---|
| 0 | 150 | 0 |
| 4 | 126 | 23 |
| 8 | 101 | 48 |
| 12 | 77 | 69 |
| 16 | 71 | 76 |
| 20 | 66 | 81 |

## Claims

1. Method for manufacturing a beer or beer containing beverage with enriched antioxidant content, comprising or consisting of the steps:
i) providing at least one raw material intended for oral consumption containing one or more precursor(s) of antioxidants in a total amount of > 150 mg/kg, based on the total amount of the raw material(s),
ii) contacting the at least one raw material provided in step i) with water and heating the mixture to at least 30°C,
iii) heating the mixture obtained in step ii) to at least 75°C for a maximum of 5 minutes,
iv) filtering the mixture obtained in step iii),
v) adding hops to the mixture obtained in step iv) and sterilizing the resulting mixture,
vi) cooling the mixture obtained in step v) to a temperature below 30°C,
vii) adding at least one yeast and/or microorganism capable of forming one or more antioxidant(s) from the precursor(s) contained in the at least one raw material provided in step i) and incubating the mixture for at least 48 hours at a temperature of 2°C to 30°C,
viii) separating the yeast and/or microorganism and optionally other solid ingredients by mechanical separation,
ix) obtaining a beer or beer containing beverage with enriched antioxidant content.

2. Method according to claim 1, wherein the / one antioxidant precursor is tyrosine.

3. Method according to any one of the previous claims, wherein the, one, more or all raw material(s) is/are selected from the group consisting of malted barley, malted wheat, oat flakes, maize, malted barley, malted wheat, barley, wheat, oat flakes, maize, ginger, pumpkin, soy, peas, apple, curcuma, nuts, walnuts, pumpkin, pumpkin seeds, sunflower seeds, hazelnuts, pecans, beans, adzuki beans, teff, kamut, brown rice, bulgur, quinoa, cous cous, spirulina, pearled barley, split peas, roman beans, kidney beans, black beans, broad beans, pinto beans, cocoa, chickpeas, lentils, macadamia nuts, almonds, cashews, chestnuts, peanuts, coconut, pistachios, rice, rye, millet, berries, raspberry, cherry, blueberry and strawberry.

4. Method according to any one of the previous claims, wherein the hops in step v) is added as hops extract and/or dried hops and/or fresh hops.

5. Method according to any one of the previous claims, wherein the sterilization in step v) is done by a method selected from the group consisting of sterile filtration, steam sterilisation, heat sterilization and high-pressure sterilization.

6. Method according to any one of the previous claims, wherein the yeast and/or microorganism provided in step vii) is/are selected from the group consisting of *Saccharomyces cerevisiae* and ssp., *Lactococcus lactis* and ssp., *Lactobacillus lactis* and ssp., *Saccharomyces pastorianus* and *Saccharomyces carlsbergensis.*

7. Method according to any one of the previous claims, wherein the mechanical separation is done by a method selected from the group consisting of centrifugation, filtration, decantation and sedimentation.

8. Method according to any one of the previous claims, wherein the obtained beer or beer containing beverage contains a total antioxidant content of > 50 mg/L, more preferably of > 75 mg/L, especially preferably of > 100 mg/L, more preferably of > 150 mg/L.

9. Method according to any one of the previous claims, wherein the obtained beer or beer containing beverage contains > 50 mg/L tyrosol, preferably > 75 mg/L and especially preferably > 100 mg/L or > 150 mg/L.

10. Beer or beer containing beverage with a total antioxidant content of > 50 mg/L, preferably > 75 mg/L, more preferably of > 100 mg/L, especially preferably of > 150 mg/L.

11. Beer or beer containing beverage according to claim 10, wherein the beer or beer containing beverage comprises > 50 mg/L tyrosol, preferably > 75 mg/L and especially preferably > 100 mg/L or > 150 mg/L.

12. Beer or beer containing beverage according to claim 10 or 11, produced or producible by a method according to any one of claims 1 to 9.

13. Non-therapeutic use of a beer or beer containing beverage according to any one of claims 10 to 12 for imparting an antioxidative effect.

14. Beer or beer containing beverage according to any one of claims 10 to 12 for use in a method for imparting a cardio protective and/or neuroprotective effect and/or health promoting or disease preventing antioxidative effect on a human subject, preferably by preventing the LDL oxidation, by increasing HDL, and/or by improving the endothelial function in a human subject.
